# EUROPÄISCHE PATENTSCHRIFT

(11) **EP 2 222 156 B1**
(45) Veröffentlichungstag und Bekanntmachung des Hinweises auf die Patenterteilung: **18.06.2014**
(21) Anmeldenummer: 08866706.8
(22) Anmeldetag: 18.12.2008
(51) Int. Cl.: A01J 27/04

(54) **Schneiden einer weichen Lebensmittelmasse**
Cutting of a soft food mass
Découpage d'une masse alimentaire molle

(30) Priorität: 27.12.2007 DE 102007063295
(43) Veröffentlichungstag der Anmeldung: 01.09.2010
(73) Patentinhaber: Hochland SE, 88178 Heimenkirch (DE)
(72) Erfinder: ZEUSCHNER, Roland, 88260 Argenbühl (DE)
(74) Vertreter: Braun-Dullaeus, Karl-Ulrich
(86) Internationale Anmeldenummer: PCT/EP2008/067951
(87) Internationale Veröffentlichungsnummer: WO 2009/083485

(56) Entgegenhaltungen:
- EP-A- 1 445 077
- DE-A1- 2 161 211
- DE-A1- 19 807 497
- US-A- 5 601 855
- US-A1- 2003 183 709
- US-B1- 6 579 550

## Beschreibung

Die Erfindung betrifft ein Verfahren zum Schneiden einer weichen Lebensmittelmasse, insbesondere zum Schneiden von maschinell bearbeitetem Käse, wie Schmelzkäse oder Mozzarella, die als breites Lebensmittelband geringer Bandstärke vorliegt, wobei das Lebensmittelband mittels eines Förderbandes mit Fördergeschwindigkeit einer Längsschneidvorrichtung, insbesondere einer Schneidwalze, zugeführt wird, die das Lebensmittelband mit axial angeordneten Schneidscheiben in parallele Längsstreifen schneidet, wobei die Drehrichtung der Schneidwalze entsprechend der Förderrichtung des Lebensmittelbandes ist. Die Erfindung betrifft außerdem eine Vorrichtung zur Umsetzung des Verfahrens.

Die DE 2 161 211 A1 offenbart ein Verfahren und eine Vorrichtung zum Handhaben eines in Form einer Bahn angelieferten Nahrungsmittelproduktes weicher Konsistenz für das Zerteilen der Bahn in einzelne Stücke. Die Bahn wird nach einem Abtrennen von einer Walze in planer Form transportiert und während des Transports auf ihrer ganzen Breite und Länge unterstützt, auch während eines Schlitzens und Abschneidens.

Generell ist das Längsschneiden solcher breiter Lebensmittelbänder, insbesondere auch von Schmelzkäse, aus einer Reihe von Dokumenten bekannt. Beispielhaft sei auf die DE-OL 2 161 211 hingewiesen, in der offenbart wird, wie ein breites Schmelzkäseband mittels Schneidscheiben, die im vorgegebenen Abstand auf einer Achse angeordnet sind, in eine entsprechende Anzahl schmalerer Längsstreifen geschnitten wird.

Ähnliche Vorrichtungen sind aus dem US 5,601,855 bekannt. Dort sind unter anderem Schneidwalzen offenbart, die auf Gegenwalzen mit glatter Oberfläche laufen oder andere, deren Schneidscheiben ineinander verzahnt sind. Allen diesen Vorrichtungen ist gemeinsam, dass die Umfangsgeschwindigkeit der Schneidwalzen etwa der Fördergeschwindigkeit des Förderbandes entspricht und dass der pastöse Schmelzkäse respektive der weiche Mozzarella aufgrund seiner klebrigen Konsistenz stark dazu neigt, an den Schneidwalzen festzukleben. Um dabei gewährleisten zu können, dass sich die geschnittenen Lebensmittelbänder nicht mit den Schneidwalzen aufwickeln, sind Mittel notwendig, die als Abstreifkamm ausgebildet sind und mit Fingern zwischen die Schneidscheiben fassen und das klebrige Produkt aus der Schneidwalze herausleiten. Bei diesen Verfahren ist der Berührungskontakt der Schneidscheiben und der Kammanordnung zum Lebensmittelprodukt verhältnismäßig intensiv, so dass es zu starken Verunreinigungen an diesen Elementen kommt. Die Teile müssen daher oft ausgetauscht und gereinigt werden, was zu einer Verringerung der Standzeiten führt.

Aufgabe der vorliegenden Erfindung ist es nunmehr, ein Verfahren und eine entsprechende Vorrichtung zum Längsschneiden eines weichen Lebensmittelbandes zu schaffen, wobei sich Verfahren und Vorrichtung mit technisch einfachen Mitteln umsetzen lassen und bei großer Wartungsfreundlichkeit zu hohen Standzeiten führen.

Diese Aufgaben werden durch das Verfahren mit den kennzeichnenden Merkmalen des Anspruch 1 und die Vorrichtung nach Anspruch 7 gelöst. Besondere Ausführungsformen sind in den jeweiligen Unteransprüchen genannt.

Der Erfindung liegt der wesentliche Gedanke zu Grunde, dass das weiche Lebensmittelband (nachfolgend auch "Produkt"), insbesondere der als flaches Band vorliegende Schmelzkäse oder Mozzarella, nicht wie bislang mit langsam laufenden Schneidscheiben mit glatter Schneide geschnitten, sondern mit schnell laufenden gezahnten Längsschneidscheiben "gesägt", wobei es sich dabei nicht um einen zerspanenden Prozess im herkömmlichen Sinne handelt. Dazu sind die Längsschneidscheiben mit einem oder mit mehreren Zähnen ausgerüstet. Der oder die Zähne sind dabei so konzipiert, dass sie dem Produkt möglichst wenig Berührungsfläche bieten und das Lebensmittelband quasi "nur" mit ihrer Zahnspitze schlitzen.

Die Drehrichtung der mit gezahnten Längsschneidscheiben, oder "Schneidblättern", bestückten Schneidwalze ist in der Förderrichtung des Produktes. Die Dreh- oder Umfangsgeschwindigkeit ist vorteilhafterweise einstellbar und kann damit an die jeweiligen Anforderungen angepasst werden. Als vorteilhaft hat es sich herausgestellt, die Umfangsgeschwindigkeit der Schneidwalze so einzustellen, dass sich die Zahnspitze mit mehr als der 1,2 fachen respektive der doppelten Fördergeschwindigkeit, insbesondere mit einer Geschwindigkeit zwischen der dreifachen und fünffachen Fördergeschwindigkeit, durch das Lebensmittel bewegt. Die Umfangsgeschwindigkeit ist im Verhältnis zur Fördergeschwindigkeit vorteilhafterweise so einzustellen, dass sich ein durchgängiger Schlitz im Produkt ergibt.

Erfindungsgemäß weisen also die Längsschneidsche.iben mit einem oder mehreren Zähnen, insbesondere etwa 10 Zähnen, versehene Klingen auf, deren Zahnhöhe größer als die Stärke des Produktes ist, so dass die Zähne nicht vollständig bis zum Zahngrund in die Lebensmittelmasse abzutauchen. Die Umfangsgeschwindigkeit der Schneidwalze wird so eingestellt, dass sich die Zahnspitze gegenüber dem bewegten Produkt bewegt und der dadurch in das sich bewegende Lebensmittelband eingebrachte Schlitz eine vorbestimmte Schlitzlänge bekommt, wobei der durch den nachfolgenden Zahn, der im Falle eines Zahnes auch derselbe Zahn sein kann, verursachte Schlitz zumindest nahezu unmittelbar an den vorangehenden Schlitz anschließt. Dabei bedeutet "unmittelbar" nicht, dass nicht auch eine Überlappung zweier Schlitze auftreten kann, der nachfolgende Zahn also in den Schlitz des vorhergehenden eingreift. Es kann für bestimmte Produkte sogar sinnvoll sein, zwischen nachfolgenden Schlitzen kurze nicht vollständig durchgeschnittene Brückenbereich stehen zu lassen, damit zwischen zwei parallelen Längsstreifen ein gewisser Zusammenhalt verbleibt. Dieser Zusammenhalt kann gegebenenfalls die weitere Verarbeitung erleichtern, da parallele Längsstreifen ihre Position gegeneinander wegen des Haltes nicht verändern können.

Die erfindungsgemäßen gezahnten Längsschneidscheiben haben den wesentlichen Vorteil, dass der Kontakt der Scheiben mit dem Produkt beim Schnitt zwischenzeitlich unterbrochen ist, so dass die Reibung zwischen den Längsschneidscheiben und dem Produkt stark reduziert ist. Zudem ist bei den in geringem Abstand parallel angeordneten Schneidscheiben die für das Produkt wirksame Klemmfläche auf ein Minimum beschränkt. Im Gegensatz zu den bekannten Schneidscheiben mit glatten Schneiden, die das Produkt durch starke Verdrängung trennen, führt die erfindungsgemäß reduzierte Fläche der Längsschneidscheiben zu einer Verminderung der Produktverdrängung und damit auch zur Verminderung der unerwünschten Produktverdichtung.

Dabei hat es sich gezeigt, dass trotz hoher Geschwindigkeiten, die am Umfang der Schneidscheiben wesentlich mehr als das Vierfache der Fördergeschwindigkeit erreichen kann, eine nur geringe Zugkraft auf das Produkt ausgeübt wird und entsprechend nur eine geringe Tendenz besteht, dass das Produkt beim Schneiden ausgerissen wird. Wegen der schonenden Behandlung ist das System bedeutend weniger störanfällig im Hinblick auf Faltenbildung im Produkt und auf ausgelöste Produktbestandteile, die auf der Produktbahn mit durch das Schneidsystem hindurch transportiert werden.

Da sich das Produkt bei dieser erfindungsgemäßen Art der schneidenden Bearbeitung nicht mehr um die Schneidwalze wickeln kann, ist es möglich, auf den bislang benötigten Abstreifkamm völlig zu verzichten. Mit dem Verzicht gehen neben der konstruktiven Vereinfachung noch andere Vorteile einher: Insbesondere entfällt die Reibung zwischen den stirnseitigen Flächen der Schneidscheiben und den "Kammzinken", sowie zwischen der Produktoberseite und der dem Produkt zugewandten Kammunterseite. Mit der insgesamt wesentlich reduzierten Reibung zwischen dem Produkt und den bearbeitenden Mitteln wird die Bröselbildung stark gemindert. Diese Tatsache trägt dazu bei, dass den Anforderungen an die Hygiene bei geringerem Reinigungsaufwand leicht genügt werden kann. Allein die reduzierte Anzahl von Bauteilen mindert schließlich den Reinigungsaufwand.

Zudem geht eine Reduzierung der Reibung mit einer entsprechenden Verringerung des Drehmoments der Antriebswellen und damit des maschinellen Aufwandes sowie der Kosten einher. Um die Reibung noch weiter zu senken, sind die an sich aus Metall, insbesondere aus nichtrostendem Stahl, gefertigten Schneidscheiben in einer besonders vorteilhaften Ausführungsform mit einem abweisenden Material, beispielsweise einem Kunststoff, wie PTFE oder FEP, beschichtet.

In einer anderen vorteilhaften Ausführungsform sind die auf der gemeinsamen Welle angeordneten gezahnten Schneidscheiben so ausgerichtet, dass die Zähne benachbarter Schneidscheiben mit ihren Zähnen gegeneinander versetzt angeordnet sind. Auf diese Weise kann der Kontakt zum Produkt noch um ein Weiteres verringert werden. Insbesondere hat es sich als vorteilhaft herausgestellt, zwischen zwei gleichartig angeordneten Schneidscheiben eine Schneidscheibe versetzt anzuordnen, wobei deren Zähne jeweils inmitten der Zahnlücken der benachbarten Schneidscheiben liegen, so dass eine versetzte Anordnung mit einer ½ Zahnteilung erreicht wird. Mit dieser versetzten Anordnung wird die Klemmfläche zwischen zwei parallelen Schneidscheiben besonders effizient gemindert. Zudem wird dadurch die auf das Produkt wirkende Ablösekraft, die beim Auftauchen des Zahnes auf das auf dem Förderband aufliegende Produkt wirkt, durch die Druckkraft des benachbarten gerade eintauchenden oder aufliegenden Zahnes zumindest teilweise kompensiert. Ein weiterer wesentlicher Vorteil der versetzten Anordnung ist, dass das Produkt während des Schnittvorgangs, also während der Produktverdrängung durch den Zahn, in den bereits vorhandenen parallelen Schnittspalt ausweichen kann. Auch dieser Effekt mindert die Gefahr des Anhaftens an den Schneidscheiben.

Es ist zudem vorteilhaft, bezüglich des Aufbaus der Schneidwalze eine möglichst große Variabilität zuzulassen. Dazu wird diese nicht einteilig konzipiert, sondern insofern modular aufgebaut, als eine Vielzahl einzelner Schneidscheiben parallel und in einem der gewünschten Produktbreite angepasstem Abstand auf eine gemeinsame Welle aufgesteckt werden. Zwischen parallelen Schneidscheiben werden dann entsprechend breite Distanzringe vorgesehen. Auch der Außendurchmesser der Distanzringe kann im Hinblick auf die zu erwartende Produktstärke angepasst werden. Durch den modularen Aufbau ist eine wesentliche Reduzierung des Umstellungsaufwands bei einer Größenänderung des zu fertigenden Produktes gegeben.

Dabei sind die Komponenten, wie die Distanzringe und die Schneidscheiben separat und unabhängig von dem Grundkörper der Schneidwalze wählbar. So können durch Wechsel der Distanzringe auf derselben Schneidwalze Produktstreifen beliebiger Breite geschnitten werden, wobei selbst solch geringe Breiten der Längsstreifen bis hinunter zu 2 mm geschnitten werden können. Hin zu großen Streifenbreiten sind keine Grenzen gesetzt. Insgesamt kann so das Verhältnis von freiem Produktdurchgang und der Nuttiefe zwischen zwei Schneidscheiben optimal angepasst werden. Neben dem Vorteil der großen Variabilität im Hinblick auf die Produktbreiten macht es der modulare Aufbau möglich, die Schneidwalze in leicht zu reinigende Einzelteile zu zerlegen. Ein weiterer Vorteil ist auch, dass der Austausch von einzelnen Schneidscheiben im Reparaturfall möglich ist.

Die modulare Bauweise ist vor allem auch dadurch begünstigt, dass keine Finger eines Kamms in die Nuten zwischen den Schneidscheiben eingreifen. Es müssen also keine vom Kamm vorgegebene Abstände eingehalten werden, so dass das auf die Welle aufgesteckte Paket von Schneidscheiben und Distanzringen von verhältnismäßig hoher Maßtoleranz ist. Selbst eine Aufsummierung der DickenToleranzen der Vielzahl der aufgesteckten Elemente führt nicht zwangsläufig zu Problemen. Diese größere Toleranz bedingt wegen der geringeren baulichen Anforderungen erhebliche Kostenvorteile.

Durch den Wegfall des Kamms ist letztendlich eine große Variation der Produktabmessung bezüglich Breite und Stärke gegeben. Die erfindungsgemäße Schneidwalze lässt eine Variation bis zu 4-fachen Produktstärke zu, während die bisherigen mit Kamm bestückten Vorrichtungen nahezu keine Flexibilität hatten. Zudem lassen sich die Längsschneidscheiben an das Produkt anpassen. So sind verschiedene Stärken der Schneidscheiben möglich, die im Fall Schmelzkäse einer Bandstärke von etwa 2 mm beispielsweise zwischen 0,3 mm und 0,8 mm variieren können. Auch die Zahnform und Zähnezahl sind variabel und werden vorteilhafterweise an das spezielle Produkt angepasst. Die Zähne können auch ein- oder beidseitig scharfgeschliffene Zahnbrüste aufweisen.

Um eine längere bogenförmige Berührung des Zahnes der Schneidscheibe mit dem Transportband respektive der darunter liegenden achsparallelen Gegendruckrolle und daher mit dem Produkt zu erreichen, kann das Transportband im Einlaufbereich um ein Stück, insbesondere um etwa 0,5 mm bis 2 mm erhöht werden. Das kann zu einer Minimierung der Umfangsgeschwindigkeit der Schneidscheibe um etwa 30% führen.

Ein besonders vorteilhafter Einsatz für das erfindungsgemäße Längsschneiden eines Käsebandes in schmale Längsstreifen ist die Herstellung von kleinen Käsewürfelchen oder Stiften. Das bedingt ein nachfolgendes Querschneiden der schmalen Längsstreifen. Das Käseband selber kann auch unmittelbar vor dem Längsschneiden durch eine Formvorrichtung angefertigt werden, wobei diese insbesondere Walzen oder Stahlbänder aufweist, die das erhitzte flüssige Produkt zu dem Käseband walzen und dieses bis auf unter Zimmertemperatur beispielsweise auf eine Temperatur zwischen 6°C und 10°C herunterkühlen bis es seine weiche oder pastöse Konsistenz bekommt. Vorteilhafterweise wird eine solche Produktlinie zur Erzeugung von Würfelchen oder Stiften so konzipiert, dass das Produkt während des gesamten Längsschneide-Vorgangs bis unmittelbar vor dem Querschneiden auf einem Transportband aufliegt. Damit werden einerseits Produktübergänge der breiten, längsgeschnittenen Produktbahn und andererseits negative Einflüsse auf das Produkt durch Reibkräfte auf die Produktoberfläche sowie Stauchung vermieden.

Je nach Anwendung kann es sinnvoll sein, die Schneidscheiben mit einer einzahnigen oder einer mehrzahnigen Klinge auszustatten. Für die Variante mit nur einem Zahn pro Schneidscheibe spricht, dass bei versetzter Anordnung der Zähne nebeneinander liegender Schneidscheiben ein noch größerer seitlicher Abstand zum jeweils nächsten eintauchenden Zahn vorhanden ist. Andererseits können die Schneidscheiben enger gepackt werden, so dass sich auch besonders schmale Streifen problemlos schneiden lassen. Schließlich gilt: Je größer der seitliche Abstand ist, desto geringer ist die Gefahr des Einklemmens oder Hochziehens des Produktbandes. Das Produkt liegt insgesamt ruhiger auf dem Förderband.

Allerdings ist bei der einzahnigen Variante eine größere Umfangsgeschwindigkeit als bei der mehrzahnigen Variante vorzusehen, um einen durchgängigen Schnitt zu erzeugen. Es hat sich jedoch herausgestellt, dass eine solch höhere Schnittgeschwindigkeit auch mit einer besseren Schneidfunktion einher geht. Insbesondere führt das Schneiden mit der einzahnigen Variante zu einer besseren Trennung im Produkt, insbesondere wenn dieses, wie Mozzarella, besonders faserig ist. Es hat sich auch als vorteilhaft herausgestellt, dass bei der einzahnigen Variante weniger Zugkraft in das Produkt eingebracht wird und das Produkt somit eine schonendere Behandlung erfährt. Auch die Tatsache, dass mit dem einen Zahn weniger Reibung zwischen Zahn und Produkt erzeugt wird, trägt zur Schonung bei. Da der eine Zahn immer in denselben Schnitt eintaucht, ist die Bröselbildung reduziert. Insgesamt ist das Schnittbild deutlich verbessert, was die Attraktivität des Produktes erhöht. Ein weiterer Vorteil liegt auch darin, dass sich die Schneidwalze wegen der geringeren Zahl von Zähnen einfacher reinigen lässt.

Nachfolgend wird die Erfindung anhand der Figuren 1 bis 5 näher erläutert. Es zeigen:
- **Figur 1:**: ein Schnitt durch eine Schneidwalze,
- **Figur 1a:**: einen vergrößerten Ausschnitt der Schneidwalze nach Figur 1,
- **Figur 2:**: ein mit einem Zahn versehenes Schneidblatt,
- **Figur 3:**: ein Teil einer Vorrichtung zum Schneiden von Schmelzkäse,
- **Figur 4:**: ein mit einem Zahn versehenes Schneidblatt und
- **Figur 5:**: eine Schneidwalze mit einzahnigen Schneidblättern

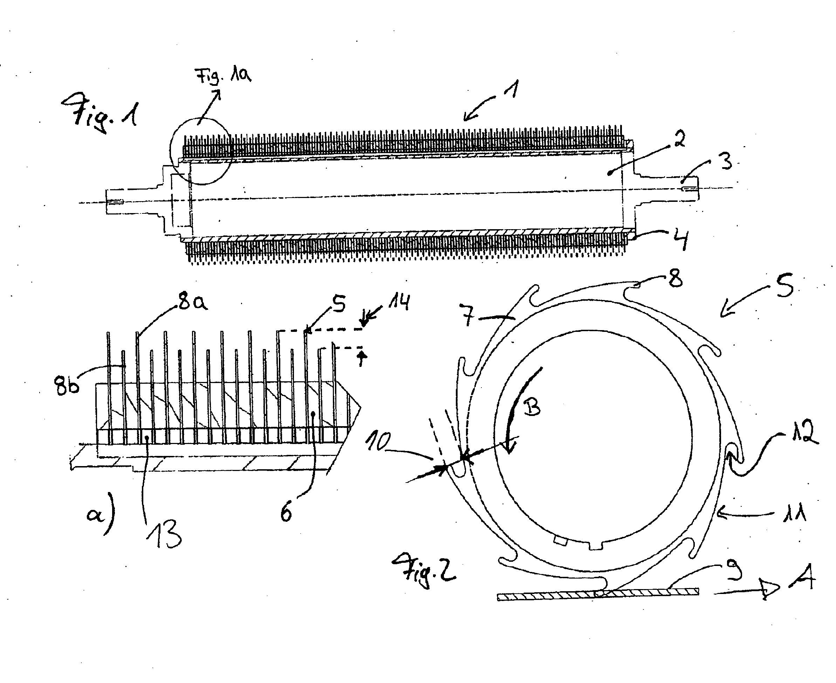

In Figur 1 ist zunächst ein Schnitt durch Schneidwalze 1 gezeigt, die einen Walzenkörper 2 mit stirnseitig angeordneten Wellenstummeln 3. Diese Schneidwalze 1 wird über einen einseitig angeordneten Zahnkranz 4 vermittels eines Zahnrades angetrieben. Die hier gezeigte Schneidwalze 1 hat bei einem Durchmesser von etwa 150 mm eine Schnittbreite von etwa 550 mm und schneidet ein flaches Käseband dieser Breite in Längsstreifen von etwa 3 mm Breite. Entsprechend sind auf dem Walzenkörper 2 etwa 180 Schneidscheiben 5 aufgebracht, die durch ebenfalls auf den Walzenkörper 2 aufgebrachte Distanzringen 6 (Figur 1a) voneinander getrennt sind. Eine solche Schneidscheibe 5 ist in Figur 2 gezeigt.

Deutlich zu erkennen sind die neun über den Umfang verteilten Schneidzähnen 7, die nur mit der Zahnspitze 8 in das Produkt 9 eindringen und das Produkt 9 dabei auf eine bestimmte Länge "aufschlitzen". Die Förderrichtung des Produktes 9 ist mit Pfeil A gekennzeichnet, die Drehrichtung der Schneidwalze 1 mit dem Pfeil B. Die Schneidzähne 7 des Schneidscheibe 5 haben eine Zahnhöhe 10, die größer als die Dicke des Produktes 9 ist, so dass die Schneidzähne nur mit der Zahnspitze 8 in das Produkt eindringen. Das über den Zahnkranz 4 angreifende Antriebsmittel treibt die Schneidwalze mit einer am Umfang gemessenen Bahngeschwindigkeit an, die mindestens der doppelten Fördergeschwindigkeit entspricht. Die Schneidzähne weisen wegen der konvex gewölbten Zahnbrüste 11 eine im Verhältnis zu dem sich bewegenden Produkt einen verhältnismäßig kleinen Schnittwinkel auf. Damit der Kontakt zum Produkt auf ein Minimum reduziert ist, haben die Zahnrücken 12 der Schneidzähne 7 eine deutlich konkave Auswölbung.

Aus den Figuren 1 ist an den unterschiedlichen Höhen der Zahnspitzen 8a und 8b auch zu erkennen, dass benachbarte Schneidscheiben 5a und 5b mit ihren Schneidzähnen 5 gegeneinander um eine ½ Zahnteilung versetzt angeordnet sind, so dass Zähne der einen Schneidscheibe jeweils inmitten der Zahnlücken der benachbarten Schneidscheibe liegen. Schneidscheiben 5 und Distanzringe 6 sind auf den Walzenkörper 2 wechselweise aufgesteckt und werden über eine Nut 13 an einer am Umfang des Walzenkörpers vorgesehenen Leiste formschlüssig gehalten. Die Spalttiefe 14 von der Zahnspitze 8 zum Außendurchmesser eines Distanzringes 6 ist etwa 12 mm. Die Distanzringe 6 haben eine Stärke von drei mm, so dass mit dieser Vorrichtung Produktstreifen dieser Breite geschnitten werden.

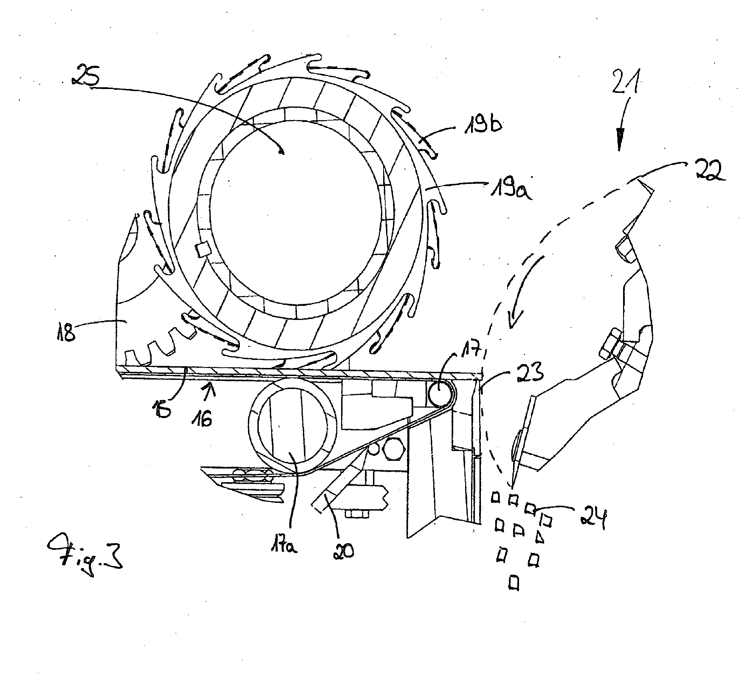

In Figur 3 ist ein Teil einer Vorrichtung zum Schneiden des zu einem flachen Band 15 geformten pastösen Schmelzkäses gezeigt, dass diesen in eine Vielzahl paralleler Längsstreifen schneidet. Der Schmelzkäse 15 wird mit Fördergeschwindigkeit auf einem Förderband 16 gefördert, welches über Antriebs- und Umlenkwalzen 17 läuft. Unterhalb des Förderbandes 16 ist eine Abstreifvorrichtung 20 angeordnet, welche die Oberfläche des Förderbandes 16 von anhaftendem Produkt reinigt.

Über dem Förderband 16 ist eine Schneidwalze 25 angeordnet, die eine Vielzahl axial im Abstand angeordneter Schneidscheiben 19 aufweist. Antriebsmittel 18 in Form eines Zahnrades treiben die Schneidwalze 25 an. Auch hier ist die versetzte Anordnung der Zähne der Schneidscheiben 19a und 19b um eine ½ Zahnteilung zu erkennen. Die komplette Schneidwalze 25 befindet sich über dem Produktband 15 und ist zur Reinigung und zum Formatwechsel mit wenig Aufwand mittels eines Schwenkrahmens zur Bedienseite heraus schwenkbar. Die Zähne der Schneidscheiben 19 sind so bemessen, dass sie bis auf das Förderband 16 reichen. Die Achse der Schneidwalze 25 ist so angeordnet, dass die Umlenkwalze 17a der Schneidwalze 25 ein Gegenlager bietet. Der Antrieb erfolgt über eine achsparallele Antriebswelle, wobei das Drehmoment über ein Zahnradpaar in die Schneidwalze 25 eingeleitet wird.

In diesem Fall ist unmittelbar hinter der Schneidwalze 25 eine in Pfeilrichtung rotierende Querschneidvorrichtung 21 angeordnet. Diese weist Schermesser 22 auf, die das mittlerweile in Streifen geschnittene Produkt 15 über eine Kante 23 abscheren. Die einzelnen Produktwürfel 24 fallen dann in eine entsprechendes Gefäß.

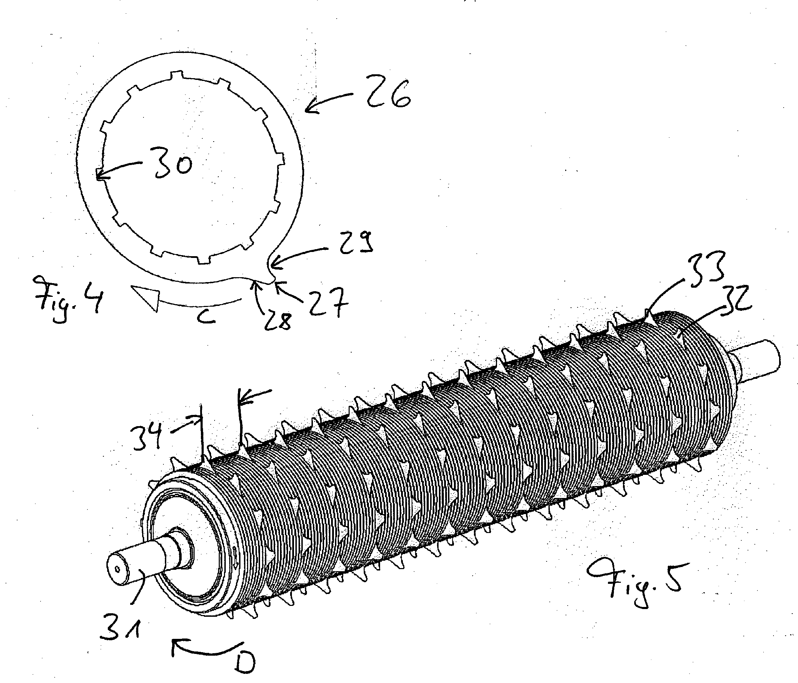

In Figur 4 ist ein mit einem Zahn versehenes Schneidblatt 26 dargestellt, wobei die Drehrichtung durch den Pfeil C symbolisiert ist. Der eine Zahn 27 des Schneidblattes 26 hat im Verhältnis zu den Zähnen 7 steilere aber konvex gewölbte Zahnbrust 28 und einen nur wenig konkaven Zahnrücken 29. Das Schneidblatt 26 wird mittels am Innenumfang angeordneten Nuten 30 formschlüssig auf einer Welle gehalten.

Figur 5 zeigt eine Schneidwalze mit einer Welle 31, auf die eine Vielzahl enger gepackter einzahniger Schneidblätter "aufgefädelt" und auf die beschriebene Weise formschlüssig gehalten sind. Deutlich zu erkennen ist die versetzte Anordnung der Zähne 32 und 33 zweier nebeneinander liegender Schneidblätter, der dazu führt, dass diese zwei Zähne sich in Drehrichtung (Pfeil D) nachfolgen und ein vergrößerter seitlicher Abstand 34 zwischen zwei gleichzeitig eintauchenden Zähnen vorhanden ist.

## Patentansprüche

1. Verfahren zum Schneiden einer weichen Lebensmittelmasse, insbesondere zum Schneiden von maschinell bearbeitetem Käse, wie Schmelzkäse oder Mozzarella, wobei die Lebensmittelmasse als breites Lebensmittelband (15) geringer Bandstärke vorliegt, wobei das Lebensmittelband (15) mittels eines Förderbandes (16) mit Fördergeschwindigkeit einer Längsschneideinrichtung, insbesondere in Form einer Schneidwalze (1,25), zugeführt wird, die das Lebensmittelband (15) mit axial angeordneten Schneidscheiben (5) in parallele Längsstreifen schneidet, wobei die Drehrichtung der Längsschneideinrichtung (1,25) entsprechend der Förderrichtung des Lebensmittelbandes (15) ist,
wobei die Schneidscheiben (5) jeweils mit mindestens einem Zahn (7, 27) versehene Klingen aufweisen,
**dadurch gekennzeichnet,**
**dass** die Zahnhöhe (10) größer als die Bandstärke ist, wobei die Umfangsgeschwindigkeit der Schneidwalze (1,25) so eingestellt wird, dass ein Zahn (7, 27) beim Schneiden mit der Zahnspitze in das Lebensmittelband (15) abtaucht und einen Schlitz bestimmter Schlitzlänge in dem sich in derselben Richtung bewegenden Lebensmittelband (15) verursacht, wobei der durch den nachfolgenden Zahn verursachte Schlitz an den vorangehenden Schlitz anschließt.

2. Verfahren nach Anspruch 1,
**dadurch gekennzeichnet,**
**dass** die Umfangsgeschwindigkeit der Schneideinrichtung (1,25) so eingestellt wird, dass sich eine Zahnspitze mit mehr als der 1,2 fachen, insbesondere mehr als der doppelten Fördergeschwindigkeit, insbesondere mit einer Geschwindigkeit zwischen der dreifachen und fünffachen Fördergeschwindigkeit, durch das Lebensmittelband (15) bewegt.

3. Verfahren nach Anspruch 2,
**dadurch gekennzeichnet,**
**dass** die Schnitte mit der konvex gewölbten Zahnbrust eines Zahnes (7, 27) geführt wird, wobei das Lebensmittelband (15) durch den Schnitt von oben gegen das Förderband (16) beaufschlagt wird.

4. Verfahren nach Anspruch 3,
**dadurch gekennzeichnet,**
**dass** die Zahntiefe (10) und die Wölbung der Zahnbrust derart bemessen wird, dass am Grund des Schlitzes verbliebene Lebensmittelmasse zumindest kurzzeitig auf dem Förderband (16) haftet.

5. Verfahren nach einem der vorherigen Ansprüche,
**dadurch gekennzeichnet,**
**dass** das flache Lebensmittelband (15) in einem vorherigen Walzprozess geformt und kontinuierlich der Längsschneideinrichtung (1,25) zugeführt wird.

6. Verfahren nach einem der vorherigen Ansprüche,
**dadurch gekennzeichnet,**
**dass** die parallelen Längsstreifen nachfolgend mit einer Querschneidvorrichtung insbesondere zu Würfeln (24) oder länglichen Stäbchen quer geschnitten werden.

7. Vorrichtung zum Schneiden eines zu einem flachen Band (15) geformten weichen Lebensmittels in eine Vielzahl paralleler Längsstreifen, insbesondere zur Durchführung des Verfahrens nach einem der vorherigen Ansprüche, wobei ein das flache Lebensmittelband (15) mit Fördergeschwindigkeit förderndes Förderband (16) und eine darüber angeordnete Längsschneideinrichtung (1,25) vorhanden ist, die eine Vielzahl axial im Abstand angeordneter Schneidscheiben (5) aufweist, wobei ein Antriebsmittel vorgesehen ist, das die Längsschneideinrichtung (1,25) antreibt,
wobei
die Schneidscheiben (5) jeweils mit mindestens einem Schneidzahn (7, 27) ausgestattet sind, **dadurch gekennzeichnet, dass** die Zahnhöhe (10) eines Schneidzahnes größer als die Dicke des Lebensmittelbandes (15) ist, und dass das Antriebsmittel die Längsschneideinrichtung (1,25) mit einer am Umfang gemessenen Bahngeschwindigkeit antreibt, die mindestens der doppelten Fördergeschwindigkeit entspricht.

8. Vorrichtung nach Anspruch 7,
**dadurch gekennzeichnet,**
**dass** benachbarte Schneidscheiben (5) mit ihren Schneidzähnen (7, 27) gegeneinander versetzt angeordnet sind.

9. Vorrichtung nach Anspruch 8,
**dadurch gekennzeichnet,**
**dass** zwischen zwei gleichartig angeordneten Schneidscheiben (5) eine Schneidscheibe (5) versetzt angeordnet ist, wobei dessen Zähne (7, 27) jeweils inmitten der Zahnlücken der benachbarten Schneidscheiben (5) liegen.

10. Vorrichtung nach einem der Ansprüche 7 bis 9 ,
**dadurch gekennzeichnet,**
**dass** die Schneidzähne (7, 27) einen im Verhältnis zu dem sich bewegenden Lebensmittelband (15) kleinen Schnittwinkel aufweisen.

11. Vorrichtung nach einem der Ansprüche 7 bis 10,
**dadurch gekennzeichnet,**
**dass** die Zahnbrüste der Schneidzähne (7, 27) konvex gewölbt sind.

12. Vorrichtung nach einem der Ansprüche 7 bis 11,
**dadurch gekennzeichnet,**
**dass** die Zahnrücken der Schneidzähne (7, 27) konkav gewölbt sind.

## Claims

1. Method for cutting a soft food mass, in particular for cutting machine-processed cheese, such as processed cheese or mozzarella, whereby the food mass is present as a broad food ribbon (15) of small ribbon thickness, whereby the food ribbon (15) is fed by means of a conveyor belt (16) with a travel speed leading to a longitudinal cutting device, in particular in the form of a cutting roller (1, 25), which cuts the food ribbon (15) with axially arranged cutting disks (5) into parallel longitudinal strips, whereby the direction of rotation of the longitudinal cutting system (1, 25) corresponds to the travel direction of the food ribbon (15), the cutting disks (5) in each case have blades that are provided with at least one tooth (7, 27),
**characterized in**
**that** the tooth height (10) is greater than the ribbon thickness, whereby the peripheral speed of the cutting roller (1, 25) is adjusted in such a way that a tooth (7, 27) is immersed in the food ribbon (15) when cutting with the tips of the teeth and creates a slot of a specific slot length in the food ribbon (15) that moves in the same direction, whereby the slot created by the subsequent tooth is adjacent to the preceding slot.

2. Method according to claim 1,
**characterized in**
**that** the peripheral speed of the cutting system (1, 25) is adjusted in such a way, that the tip of a tooth moves through the food ribbon (15) at more than 1.2-fold, in particular more than twice, the travel speed, in particular at a speed between the 3-fold and 5-fold of the travel speed.

3. Method according to claim 2,
**characterized in**
the section is conveyed by the convex-curved toothbrush of a tooth (7, 27), whereby the food ribbon (15) is charged by the cutting from above against the conveyor belt (16).

4. Method according claim to 3,
**characterized in**
wherein the tooth depth (10) and the curvature of the toothbrush are dimensioned in such a way, that food mass remaining at the base of the slot adheres to the conveyor belt (16) at least for a short time.

5. Method according to one of the preceding claims,
**characterized in**
**that** the flat food ribbon (15) is formed in a previous rolling process and is fed continuously to the longitudinal cutting system (1, 25).

6. Method according to one of the preceding claims,
**characterized in**
**that** subsequently the parallel longitudinal strips are cut crosswise with a cross-cutting device in particular to form cubes (24) or small longitudinal rods.

7. Device for cutting a soft food that is formed in a flat ribbon (15) into a number of parallel longitudinal strips, in particular for implementing the process according to one of the preceding claims, whereby a conveyor belt (16) that conveys the flat food ribbon (15) at travel speed and a longitudinal cutting system (1, 25) is available, that is located above it and comprising a number of cutting disks (5) that are arranged axially at intervals are present, whereby a drive means is provided that drives the longitudinal cutting system (1, 25), whereby the cutting disks (5) are each equipped with at least one cutting tooth (7, 27),
**characterized in**
**that** the tooth height (10) of a cutting tooth is greater than the thickness of the food ribbon (15), and wherein the drive means drive the longitudinal cutting system (1, 25) at a track speed that is measured at the periphery and that corresponds to at least twice the travel speed.

8. Device according to claim 7,
**characterized in**
**that** adjacent cutting disks (5) are arranged with their cutting teeth (7, 27) offset to one another.

9. Device according to claim 8,
**characterized in**
**that** between two similarly arranged cutting disks (5), a cutting disk (5) is arranged offset, whereby its teeth (7, 27) in each case lie amidst the tooth gaps of the adjacent cutting disks (5).

10. Device according to any of claims 7 to 9 ,
**characterized in**
**that** the cutting teeth (7, 27) have small cutting angles relating to the moving food ribbon (15).

11. Device according to any of claims 7 to 10,
**characterized in**
**that** the toothbrushes of the cutting teeth (7, 27) are convex-curved.

12. Device according to any of claims 7 to 11,
**characterized in**
**that** the tooth backs of the cutting teeth (7, 27) are concave-curved.

## Revendications

1. Procédé destiné à couper une masse molle de produit alimentaire, notamment à couper des fromages traités mécaniquement, tels que des fromages fondus ou de la mozzarella, lors duquel la masse de produit alimentaire se présente sous la forme d'une large bande (15) de produit alimentaire d'une faible épaisseur de bande, lors duquel on alimente la bande (15) de produit alimentaire au moyen d'une bande de transport (16) à la vitesse de transport d'un système de coupe longitudinale, notamment sous la forme d'un cylindre de rognage (1, 25) qui coupe la bande (15) de produit alimentaire avec des disques à trancher (5) placés en direction axiale en rubans longitudinaux parallèles, le sens de rotation du système de coupe longitudinale (1, 25) correspondant au sens de transport de la bande (15) de produit alimentaire,
les disques à trancher (5) comportant des lames dotées chacune d'au moins une dent (7, 27),
**caractérisé en ce que** la hauteur de dent (10) est supérieure à l'épaisseur de la bande, sachant qu'on règle la vitesse périphérique du cylindre de rognage (1, 25) de façon telle que lors de la coupe, une dent (7, 27) plonge par la pointe de dent dans la bande (15) de produit alimentaire et génère une entaille d'une longueur d'entaille définie dans la bande (15) de produit alimentaire se déplaçant dans la même direction, l'entaille générée par la dent suivante se raccordant sur l'entaille précédente.

2. Procédé selon la revendication 1, **caractérisé en ce qu'**on règle la vitesse périphérique du système de coupe (1, 25) de telle sorte qu'une pointe de dent se déplace à plus de 1,2 fois, notamment à plus du double de la vitesse de transport, notamment à une vitesse comprise entre le triple et le quintuple de la vitesse de transport à travers la bande (15) de produit alimentaire.

3. Procédé selon la revendication 2, **caractérisé en ce que** les coupes sont guidées par la face d'attaque de courbure convexe d'une dent (7, 27), alors que par la coupe, la bande (15) de produit alimentaire est soumise contre la bande de transport (16).

4. Procédé selon la revendication 3, **caractérisé en ce que** la profondeur de dent (10) et la courbure de la face d'attaque sont dimensionnées de telle sorte que de la masse de produit alimentaire restant sur le fond de l'entaille adhère au moins brièvement sur la bande de transport (16).

5. Procédé selon l'une quelconque des revendications précédentes, **caractérisé en ce que** lors d'un processus de laminage précédent, on façonne la bande (15) de produit alimentaire plate et on l'alimente en continu vers le système de coupe longitudinale (1, 25).

6. Procédé selon l'une quelconque des revendications précédentes, **caractérisé en ce qu'**on coupe ensuite à la transversale les rubans longitudinaux parallèles à l'aide d'un dispositif de coupe transversale en dés (24) ou en baguettes longitudinales.

7. Dispositif destiné à couper un produit alimentaire mou façonné en une bande (15) plate dans une pluralité de rubans longitudinaux parallèles pour réaliser le procédé selon l'une quelconque des revendications précédentes, une bande de transport (16) transportant la bande de produit alimentaire (15) plate à une vitesse de transport et un système de coupe longitudinale (1, 25) placé au-dessus, qui comporte une pluralité de disques à trancher (5) placés en direction axiale avec un écart étant présente, un moyen d'entraînement qui entraîne le système de coupe longitudinale (1, 25) étant prévu, les disques à trancher (5) étant munis chacun d'au moins une dent de coupe (7, 27), **caractérisé en ce que** la hauteur de dent (10) d'une dent coupante est supérieure à l'épaisseur de la bande (15) de produit alimentaire et **en ce que** le moyen d'entraînement entraîne le système de coupe longitudinale (1, 25) à une vitesse de bande mesurée sur la périphérie qui correspond au moins au double de la vitesse de transport.

8. Dispositif selon la revendication 7, **caractérisé en ce que** par leurs dents coupantes (7, 27), des disques à trancher (5) voisins sont placés en étant mutuellement déportés.

9. Dispositif selon la revendication 8, **caractérisé en ce qu'**entre deux disques à trancher (5) placés de manière identique, un disque à trancher (5) est placé en étant déporté, ses dents (7, 27) se situant chacune au milieu des entredents des disques à trancher (5) voisins.

10. Dispositif selon l'une quelconque des revendications 7 à 9, **caractérisé en ce que** les dents coupantes (7, 27) présentent un petit angle de coupe par rapport à la bande (15) de produit alimentaire en mouvement.

11. Dispositif selon l'une quelconque des revendications 7 à 10, **caractérisé en ce que** les faces d'attaque des dents coupantes (7, 27) ont une courbure convexe.

12. Dispositif selon l'une quelconque des revendications 7 à 11, **caractérisé en ce que** les dos de dents des dents coupantes (7, 27) ont une courbure concave.
